# EUROPEAN PATENT SPECIFICATION

(11) **EP 1 515 342 B1**
(45) Date of publication and mention of the grant of the patent: **25.10.2017**
(21) Application number: 04104234.2
(22) Date of filing: 02.09.2004
(51) Int. Cl.: G11B 20/14, G11B 20/10, G11B 7/005, G11B 27/24

(54) **DEMODULATOR AND DATA REPRODUCTION DEVICE**
DEMODULATOR UND DATENWIEDERGABEGERÄT
DÉMODULATEUR ET DISPOSITIF DE REPRODUCTION DE DONNÉES

(30) Priority: 09.09.2003 JP 2003317495
(43) Date of publication of application: 16.03.2005
(73) Proprietor: TEXAS INSTRUMENTS INC., Dallas, Texas 75265 (US)
(72) Inventor: Shigeeda, Akio, 610-0361, Tokyo (JP); Ohmaru, Makoto, 206-0023, Tokyo (JP)
(74) Representative: Zeller, Andreas

(56) References cited:
- US-A- 4 453 260
- US-B1- 6 345 018
- US-B1- 6 538 982
- VLERKEN VAN J J L M ET AL: "Format detection for DVD+ReWritable 4.7 GB" INTERNATIONAL CONFERENCE ON CONSUMER ELECTRONICS. 2000 DIGEST OF TECHNICAL PAPERS. ICCE. JUNE 13-15, 2000, NEW YORK, NY : IEEE, US, 13 June 2000 (2000-06-13), pages 162-163, XP002197293 ISBN: 0-7803-6302-7
- PATENT ABSTRACTS OF JAPAN vol. 2000, no. 25, 12 April 2001 (2001-04-12) & JP 2001 209937 A (RICOH CO LTD), 3 August 2001 (2001-08-03)

## Description

### FIELD OF THE INVENTION

The present invention pertains to a demodulator for a phase modulated signal and a data recorder containing said demodulator. For example, the present invention pertains to a demodulator for demodulating the wobble signal of an optical disk and a data recorder for said optical disk.

### BACKGROUND OF THE INVENTION

In general, the recording surface of a recordable optical disk contains a pre-formed guide groove in the shape of a spiral to ensure that the laser beam can correctly follow the recording track during writing. The edges of the guide groove describe a periodic undulation or wobble. As the laser beam is irradiated on the edges, the reflected light is converted into an electronic signal, so that a periodic signal (wobble signal) corresponding to the wobble is obtained.

For example, when the optical disk is rotated at a constant linear velocity, the write signal may be used as the control signal. On the other hand, when the optical disk is rotated at a constant angular velocity, it is used to generate the clock signal for write processing.

Also, on DVD+RW or other optical disks, information indicating the address on the recording track is superimposed on the periodic carrier component of the wobble. By using such information as a reference, even when data is written in the blank region of the optical disk, it is still possible to correctly set the irradiating position of the light beam.

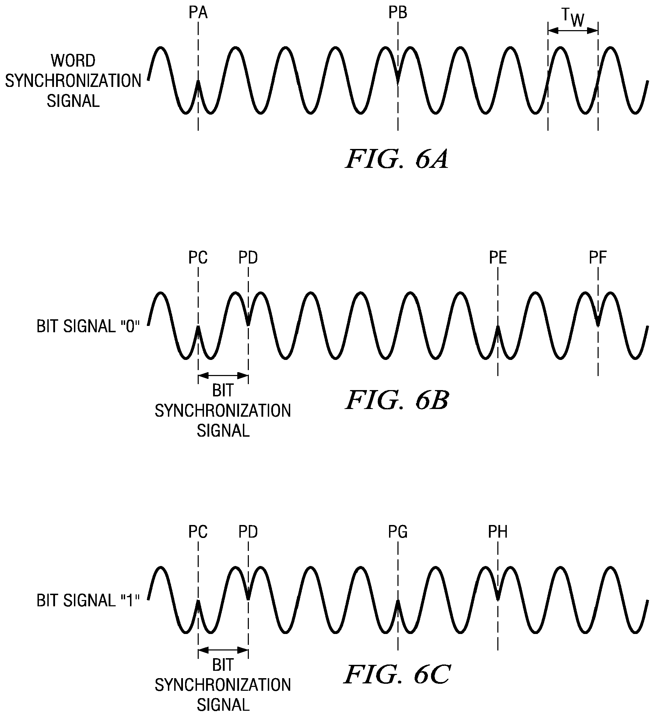

For example, the wobble signal of the DVD+RW format will be explained below with reference to the waveform diagram shown in FIG. 6.

As shown in FIG. 6, the wobble signal of the DVD+RW format is a signal in which the carrier component is phase-modulated to correspond to the address information known as ADIP (address in pre-groove).

In the ADIP signal format, the period of the wobble signal (wobble period Tw) is set to 32 times the period (channel bit period T) of the bit data (channel bit) recorded on the optical disk (Tw = 32T).

Also, 93 wobble periods (93Tw) form a data wobble unit, and 52 data wobble units form one ADIP word.

The bit synchronization signal for determining the starting point is inserted at the head of each data wobble unit. As shown in FIGS. 6(B) and (C), the bit synchronization signal is characterized by two phase change points (PC, PD) separated by one wobble period (1Tw).

After the bit synchronization signal, a bit signal having different signal pattern corresponding to the bit value is inserted.

As shown in FIG. 6(B), the "0" bit signal is characterized by phase change point PE, which is six wobble periods (6Tw) from the initial phase change point PC of the bit synchronization signal, and by phase change point PF, which is two wobble periods (2Tw) from said phase change point PE.

As shown in FIG. 6(C), the "1" bit signal is characterized by phase change point PG, which is four wobble periods (4Tw) from the initial phase change point PC of the bit synchronization signal, and by phase change point PH, which is two wobble periods (2Tw) from said phase change point PG.

Unlike the 8 wobble periods (8Tw) composed of said bit synchronization signal and bit signal, the remaining periods of the data wobble unit (85Tw) is composed of a signal pattern with a single phase that does not contain a phase change point.

Also, the word synchronization signal is inserted in place of said bit synchronization signal and bit signal in the head data wobble unit in the 1ADIP word. As shown in FIG. 6(A), the word synchronization signal is characterized by two phase change points (PA, PB) separated by 4 wobble periods (4Tw).

The synchronization detection method is typically used to demodulate said phase modulated signal, wherein the phase modulated signal and its carrier component are multiplied. That is, the sinusoidal signal synchronized to the carrier component of the phase-modulated signal is reproduced and multiplied by the phase-modulated signal. Then, the product is low pass-filtered, and the positive/negative sign of the result is determined.

Another method of demodulating the phase modulated signal, for example, is the method described in Patent Reference 1. In this method, the integration value of the phase modulated signal is compared with a threshold value. That is, a timing signal synchronized to the carrier component of the phase modulated signal is generated, and the integration value is computed for each full-period and half-period of the phase modulated signal. By comparing the integration value with the threshold value, the modulated signal is demodulated to determine its value ("0" or "1").
[Patent Reference 1] Japanese Kokai Patent Application No. 2001-209937

However, when a repeated write operation is performed on a rewritable optical disk, such as a DVD+RW, etc., due to the degradation of the optical disk, noise may be superimposed on the wobble signal.

However, in all of the aforementioned demodulation methods, the value of the demodulation signal is judged by comparing the results obtained by multiplication, integration, etc. of phase modulated signal with a fixed threshold value. Consequently, when noise is superimposed on the phase modulated signal, the waveform collapses, and errors may easily take place in the judgment, which is undesirable.

Also, in recent years, with further increases in the write speed of optical disks and in the frequency of the wobble signal, there has been a demand for higher speed demodulation. However, the aforementioned synchronization detection method requires complicated multiplication of sinusoidal waveforms. Consequently, it is difficult to increase the processing speed, which is undesirable.

Also, in order to multiply sinusoidal waveforms, it is necessary to use complex multiplier circuits for processing variables. Consequently, the circuit scale and power consumption increase, which is also undesirable.

The purpose of the present invention is to solve the aforementioned problems of the conventional methods by providing a demodulator for phase modulated signals that can suppress an increase in the demodulation errors due to superimposed noise.

Another purpose of the present invention is to provide a data recorder that can reliably write data with few errors to the recording medium through the incorporation of said demodulator. In this regard US patent 6,538,982 describes a demodulator for such devices in accordance with the preamble of appended claim 1. The present invention provides demodulator apparatus as set forth in the claims.

In an embodiment, the demodulator is used to demodulate a phase modulated signal containing a bit synchronization signal that is inserted periodically and a bit signal that is inserted synchronously with said bit synchronization signal and that has a signal pattern corresponding to the bit value, wherein the demodulator is comprised of the following means: a carrier reproduction means that reproduces the carrier component of said phase modulated signal, an integration value computation means that computes the integration value over one period of said phase modulated signal or the integration values over plural sequential periods synchronously with said reproduced carrier component, a bit synchronization signal detection means that detects said bit synchronization signal inserted in said phase modulated signal, a bit signal characteristic quantity computation means that computes for each said bit value the characteristic quantity of said bit signal corresponding to the sum obtained after assigning prescribed signs to said integration values, respectively, during the periods where a change in phase of said bit synchronization signal in the signal range of said bit signal obtained by insertion synchronously with said detected bit synchronization signal should take place, and a bit value judging means that compares the characteristic quantities of said computed bit values, and judges the bit value of said bit signal on the basis of the comparison result.

Said bit synchronization signal detection means may have a bit synchronization signal characteristic quantity computation means that computes the characteristic quantity of said bit synchronization signal corresponding to the sum obtained after assigning the prescribed signs to said integration values, respectively, during the periods where a change in phase of said bit synchronization signal in the signal range of said bit synchronization signal obtained by insertion in said phase modulated signal should take place, a threshold setting means that sets the threshold corresponding to the peak value and average value of said computed characteristic quantity of bit synchronization signal, and a first bit synchronization signal judgment means that compares said computed characteristic quantity of bit synchronization signal with said set threshold, and determines whether the signal of said signal range is said bit synchronization signal on the basis of said comparison result.

Also, said demodulator described may have a word synchronization signal detection means, which detects the word synchronization signal inserted periodically in said phase modulated signal in place of said bit synchronization signal.

Said word synchronization signal detection means may contain a synchronization signal characteristic quantity computation means that computes the characteristic quantity of said word synchronization signal corresponding to the sum obtained after assigning the prescribed signs to said integration values, respectively, during the periods where a change in phase of said word synchronization signal should take place in the signal range of said word synchronization signal that can be inserted in place of said detected bit synchronization signal, and a first word synchronization signal judgment means that compares said computed characteristic quantity of word synchronization signal and said computed characteristic quantity of bit synchronization signal, and determines whether the signal of the signal range is said word synchronization signal on the basis of the result of said comparison.

Also, said carrier reproduction means may have a delay signal generating means that generates plural delay signals for establishing plural delays corresponding to the integer multiple of the period of said carrier component in said phase modulated signal, and an adder means that adds the plural delay signals generated by said delay signal generating means.

A second aspect of the present invention for realizing said purpose provides a data recorder which contains a demodulator, which is used to demodulate a phase modulated signal pre-recorded on a recording medium and containing a bit synchronization signal that is inserted periodically and a bit signal that is inserted synchronously with said bit synchronization signal and that has a signal pattern corresponding to the bit value, wherein the data recorder uses the demodulation result of said demodulator to write data to said recording medium.

Said demodulator is comprised of the following means: a carrier reproduction means that reproduces the carrier component of said phase modulated signal, an integration value computation means that computes the integration value over one period of said phase modulated signal or the integration values of plural sequential periods synchronously with said reproduced carrier component, a bit synchronization signal detection means that detects said bit synchronization signal inserted in said phase modulated signal, a bit signal characteristic quantity computation means that computes for each said bit value the characteristic quantity of said bit signal corresponding to the sum obtained after assigning prescribed signs to said integration values, respectively, during the periods where a change in phase of said bit synchronization signal should take place in the signal range of said bit signal obtained by insertion synchronously with said detected bit synchronization signal,
and a bit value judging means that compares the characteristic quantities of said computed bit values, and determines the bit value of said bit signal on the basis of the comparison result.

The demodulator of the present invention makes it possible to suppress increases in the demodulation error when the waveform of the phase modulated signal collapses due to the superimposition of noise in the signal.

Also, even when the waveform of the phase modulated signal pre-recorded in the recording medium collapses due to an increased number of rewrite cycles, it is still possible with the data recorder of the present invention to write high-quality data with few errors to the recording medium.

### BRIEF DESCRIPTION OF THE DRAWINGS

FIG. 1 is a block diagram illustrating an example of the constitution of the data recording/reproduction device pertaining to an embodiment of the present invention.
FIG. 2 is a block diagram illustrating an example of the constitution of the pre-processing part of the wobble demodulator.
FIG. 3 is a block diagram illustrating an example of the constitution of the demodulation processing part of the wobble demodulator.
FIG. 4 is a block diagram illustrating an example of the constitution of the wobble clock reproduction part of the wobble demodulator.
FIG. 5 is a timing diagram illustrating an example of waveforms from various parts of the demodulation processing part when a bit signal of "0" is input.
FIG. 6 is a waveform diagram illustrating the wobble signal in the DVD+RW format.

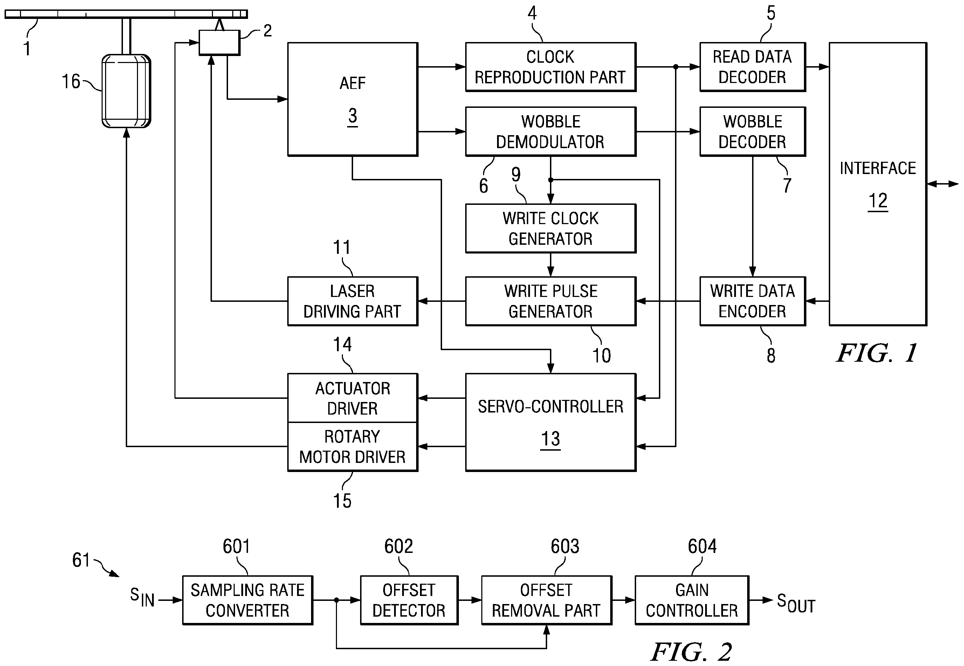

FIG. 1 is a block diagram illustrating an example of constitution of the data recording/reproduction device pertaining to an embodiment of the present invention.

The data recording/reproduction device shown as example in FIG. 1 has the following parts: optical pickup 2, analog front end part 3, clock reproduction part 4, read data decoding part 5, wobble demodulator 6, wobble decoding part 7, write data encoding part 8, write clock generating part 9, write pulse generating part 10, laser driving part 11, interface part 12, servo-controller 13, actuator driving part 14, rotary motor driver 15, and disk motor 16.

Also, wobble demodulator 6 as an embodiment of the demodulator of the present invention.

### Optical pickup 2

In optical pickup 2, when data written in optical disk 1 is read, a laser beam for data read and for generating control signal is irradiated on the recording surface of optical disk 1, and the light reflected from the recording surface is converted into an electronic signal. Also, when data is written in optical disk 1, a laser beam for writing to the recording surface of optical disk 1 is irradiated to write the data, and at the same time, the laser beam for generating the control signal is irradiated and the reflected light is converted into an electronic signal.

### Analog front end part 3

In analog front end part 3, the electronic signal converted from the reflected light in optical pickup 2 undergoes digitization, wave-shaping, A/D conversion, and other signal processes to reproduce the read bit row corresponding to the channel bits on the recording track of optical disk 1. Also, various control signals are generated by said signal processing.

Examples of the control signals generated by analog front end part 3 include the wobble signal which corresponds to the wobble structure of the optical disk, the tracking error signal, which indicates the tracking error when the data recording track of the optical disk is tracked, the focusing error signal, which is used to maintain a constant focal distance between optical disk 1 and optical pickup 2, etc.

### Clock reproduction part 4

On the basis of the periodic signal component contained in the periodic signal component of the read bit row output from analog front end part 3, clock reproduction part 4 reproduces the read clock signal as the reference of timing during the read processing.

### Read data decoding part 5

Read data decoding part 5 performs the prescribed decoding process for the read bit row output from analog front end part 3 and reproduces the read data synchronously with the read clock signal reproduced by the clock reproduction part. The reproduced read data is transferred via interface part 12 to the computer or other host device.

### Wobble demodulator 6

On the basis of the wobble signal output from analog front end part 3, wobble reproduction part 6 reproduces wobble clock signal CKw. Also, it performs demodulation of the wobble signal synchronously with said wobble clock signal CKw.

The detailed constitution of wobble demodulator 6 will be explained below with reference to FIGS. 2-4.

### Wobble decoding part 7

Wobble decoding part 7 performs the prescribed decoding processing for the signal that has been demodulated by wobble demodulator 6.

### Write data encoding part 8

Write data encoding part 8 performs the prescribed encoding treatment for the write data sent from the computer or other host device via interface part 12 synchronously with the write clock signal (to be explained below), and generates a write pulse row corresponding to the channel bit on the recording track of optical disk 1.

### Write clock generating part 9

Write clock generating part 9 multiplies the wobble clock signal CKw reproduced from the wobble signal in wobble reproduction part 6 by a prescribed multiplier ratio to generate the write clock signal as a timing reference for the write process.

### Write pulse generating part 10

The write pulse row output from write data encoding part 8 is input to write pulse generating part 10 and processed corresponding to the type of disk to implement a write instruction from a controller (not shown in the figure). In this way, an appropriate write pulse signal corresponding to the type of optical disk is generated and is output to laser driving part 11.

### Laser driving part 11

Laser driving part 11 generates a signal for driving the laser source of optical pickup 2 corresponding to the write pulse signal output from write pulse generating part 10, and generates a laser beam for writing data.

### Interface part 12

Interface part 12 communicates with the host device (not shown in the figure) and retrieves write data and read data on the basis of ATAPI (AT attachment packet interface) or another interface format.

### Servo-controller 13

Based on the tracking error signal, focus error signal, and other control signals output from analog front end part 3, servo-controller 13 generates signals for controlling the drive signals output from actuator drive part 14 and rotary motor driver 15, so that the laser beam of optical pickup 2 is irradiated at the assigned position on optical disk 1.

For example, servo-controller 13 may be a DSP (digital signal processor) or another processor.

### Actuator drive part 14

Actuator drive part 14 generates a signal for driving the actuator (not shown in the figure) that drives optical pickup 2 to move in accordance with to the control signal from servo-controller 13.

### Rotary motor driver 15

Rotary motor driver 15 generates a signal for driving disk motor 16 corresponding to the control signal from servo-controller 13.

### Disk motor 16

Disk motor 16 drives optical disk 1 to rotate with a certain torque that is generated in accordance with the drive signal supplied from rotary motor driver 15.

In the following, the detailed constitution of said wobble demodulator 6 will be explained with reference to FIGS. 2-4.

FIG. 2 is a block diagram illustrating an example constitution of pre-processor 61 of wobble demodulator 6.

This pre-processor 61 is a unit that performs sampling rate conversion, offset removal, gain control, and other processes on the wobble signal output from analog front end part 3.

Pre-processor 61 shown as an example in FIG. 2 has sampling rate converter 601, offset detection part 602, offset removal part 603, and gain controller 604.

### Sampling rate converter 601

Sampling rate converter 601 converts the sampling rate of the wobble signal, which has been sampled at a lower rate than that of the write clock signal in analog front end part 3, into the same rate as the write clock signal.

For example, for a DVD+RW format, the bit rate of the channel rate is about 26.16 Mbps in the case of X1-speed write operation, and is over 200 Mbps in the case of X8-speed write operation. When a write process is performed at such a high rate, the analog/digital conversion rate in analog front end part 3 is set to about 100 Mbps, e.g. and X2 sampling rate conversion is performed in sampling rate converter 601. In this way, the analog/digital conversion speed is suppressed, so that the analog/digital converter can be simplified.

The wobble signal after the rate conversion is performed by said sampling rate converter 601 is output to offset detection part 602 synchronously with the write clock signal of write clock signal generating part 9 that has the same frequency as that of the channel bit.

### Offset detection part 602

Offset detection part 602 detects the low-frequency offset component in the wobble signal that has undergone rate conversion by sampling rate converter 601.

For example, offset detection part 602 may be realized with an IIR (infinite impulse response) filter or other filter circuit. Also, by setting the coefficients of the coefficient multiplication part of the filter circuit to an appropriate value, such as a power of 2 or its reciprocal, or a multiple of a power of 2 or its reciprocal, etc., it is possible to replace the multiplication operation in the coefficient multiplication part with a simpler operation, such as a bit shift, addition/subtraction, etc.

### Offset removal part 603

Offset removal part 603 removes the offset component detected by offset detection part 602 from the wobble signal that has undergone rate conversion by sampling rate converter 601.

### Gain controller 604

The wobble signal, from which the offset component has been removed by offset detection part 603, is input to gain controller 604, which amplifies it; the gain is controlled such that the amplitude of the output signal is constant. Also, when the amplitude of the input wobble signal exceeds a prescribed level due to presence of scratches on the recording surface of the optical disk or for some other reason, the amplitude of the output signal will be limited to a prescribed upper limit level.

By setting an appropriate gain value of gain controller 604, such as a power of 2 or its reciprocal, or a multiple of a power of 2 or its reciprocal, etc., it is possible to replace the multiplication processing of gain controller 604 with a simpler operation, such as bit shift, addition/subtraction, etc.

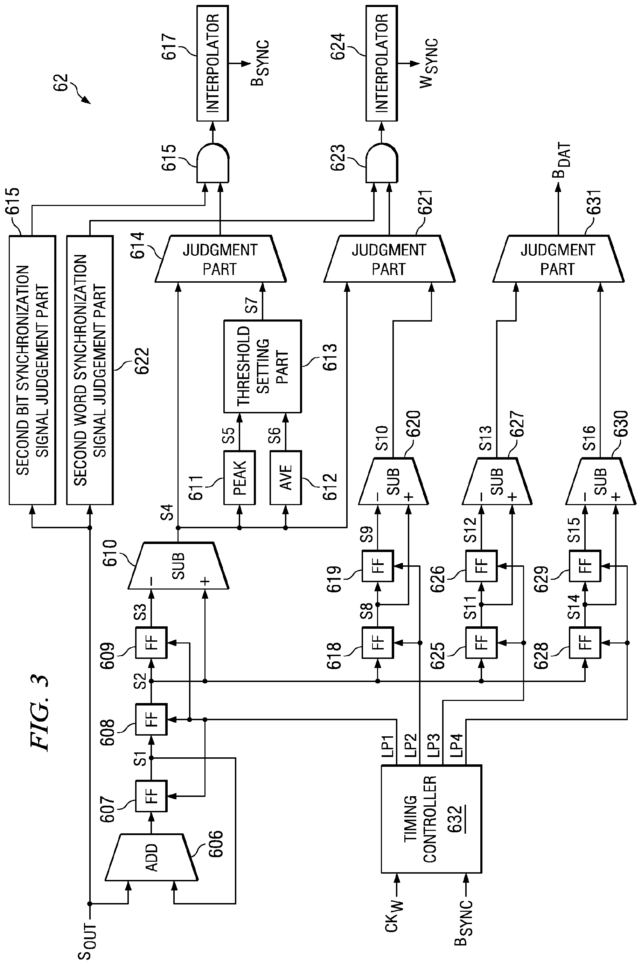

FIG. 3 is a block diagram illustrating an example constitution of demodulation processor 62 of wobble demodulator 6.

Demodulation processor 62 demodulates wobble signal Sout, which has been subject to offset removal, and other processes in pre-processor 61, and outputs bit synchronization signal Bsync, word synchronization signal Wsync, and bit signal Bdat.

In the example of this embodiment, wobble signal Sout demodulated by demodulation processor 62 is the phase demodulated signal ADIP shown in FIG. 6. Also, period Tw of wobble signal Sout is 32 times the period T of the channel bit.

Demodulation processor 62 shown as an example in FIG. 3 includes adder 606, subtractors 610, 620, 627, 630, flip-flops 607-609, 618, 619, 625, 626, 628, 629, peak value computation unit 611, average value computation unit 612, threshold setting part 613, first bit synchronization signal judgment part 614, second bit synchronization signal judgment part 615, first word synchronization judgment part 621, second word synchronization signal judgment part 622, bit value judgment part 631, AND-gates 616, 623, bit synchronization signal interpolator 617, word synchronization signal interpolator 624, and timing controller 632.

The unit containing adder 606, flip-flop 607 and flip-flop 608 is an implementation of the integration value computation means of the present embodiment.

The unit containing flip-flop 609 and subtractor 610 is an implementation of the bit synchronization signal characteristic quantity calculation means of the present embodiment.

The unit containing peak value computation unit 611, average value computation unit 612, and threshold setting part 613 is an implementation of the threshold setting means of the present embodiment.

First bit synchronization signal judgment part 614 is an implementation of the first bit synchronization signal judgment means of the present embodiment.

Second bit synchronization signal judgment part 615 is an implementation of the second bit synchronization signal judgment means of the present embodiment.

Bit synchronization signal interpolator 617 is an implementation of the bit synchronization signal interpolation means of the present embodiment.

The unit containing flip-flops 618, 619 and subtractor 620 is an implementation of the word synchronization signal characteristic quantity computation means of the present embodiment.

First word synchronization signal judgment part 621 is an implementation of the first word synchronization signal judgment means of the present embodiment.

Second word synchronization signal judgment part 622 is an implementation of the second word synchronization signal judgment means of the present embodiment.

Word synchronization signal interpolator 624 is an implementation of the word synchronization signal interpolation means of the present embodiment.

The unit containing flip-flops 625, 626, 628, 629 and subtractors 627, 630 is an implementation of the bit signal characteristic quantity computation means of the present embodiment.

Bit value judgment part 631 is an implementation of the bit value judgment means of the present embodiment.

Adder 606 adds wobble signal Sout output from pre-processor 61 and signal S1 held in flip-flop 607.

Flip-flop 607 holds the output signal of adder 606 synchronously with the write clock signal generated by write clock generating part 9. Also, it resets the value of hold signal S1 to zero synchronously with latch pulse signal LP1 output at each wobble period Tw from timing controller 632 (to be explained below).

That is, flip-flop 607 outputs as signal S1 the result of sequential integration of wobble signals Sout input synchronously with the write clock signal, and the integration value is reset to zero at each wobble period Tw.

Flip-flop 608 holds signal S1 from flip-flop 607 synchronously with latch pulse signal LP1.

That is, flip-flop 608 sequentially outputs integration value S2 of 1 period (1Tw) of wobble signal Sout.

Flip-flop 609 holds integration value S2 output from flip-flop 608 synchronously with latch pulse LP1.

Subtractor 610 subtracts integration value S3 held in flip-flop 609 from integration value S2 held in flip-flop 608. That is, signal S4 output from subtractor 610 is obtained in two consecutive wobble periods by inverting the sign of integration value S3 of the first period and adding it to integration value S2 of the second period.

As shown in FIGS. 6(B) and (C), the bit synchronization signal is characterized by the separation of two phase change points (PC, PD) by one wobble period.

Also, as shown in the figure, wobble signal Sout in the vicinity of first phase change point PC is negative in sign, while wobble signal Sout in the vicinity of second phase change point PD is positive in sign.

Here, by means of appropriate timing control of latch pulse LP1 in timing controller 632, integration value S2 of flip-flop 608 is the integration value over one wobble period held around the phase change point of the wobble signal. As a result, in the ideal bit synchronization signal, the integration value of the first period is negative, while the integration value of the second period is positive. Consequently, when said integration value of the bit synchronization signal is input to subtractor 610, its output signal S4 has the maximum positive value.

That is, output signal S4 of subtractor 610 is computed as follows: in the signal range (2 wobble periods) of the bit synchronization signal obtained by inserting in the wobble signal, prescribed sign operations are performed for integration value S2 in the periods where a phase change should take place as the bit synchronization signal (the first period and the second period of said 2 wobble periods), respectively, (sign inversion for integration value S3 in the first period, and non-inversion as the sign operation for integration value S2 of the second period), and the sum is computed. The computation result has the maximum positive value when a pattern in agreement with the aforementioned characteristic features of the bit synchronization signal appears in the signal pattern of the wobble signal.

In this way, output signal S4 of subtractor 610 has the property that its value becomes larger for signal patterns with characteristic features similar to the bit synchronization signal, and it is a characteristic quantity of the bit synchronization signal.

Peak value computation unit 611 computes the peak value of output signal S4 of subtractor 610.

For example, peak value computation unit 611 can be realized with an IIR filter or another filter circuit. Also, by setting the values of the coefficients of the coefficient multiplication part of the filter circuit to appropriate values, such as a power of 2 or its reciprocal, or a multiple of a power of 2 or its reciprocal, etc., it is possible to replace the multiplication operation of the coefficient multiplication part with a simpler operation, such as a bit shift, addition/subtraction, etc.

Average value computation unit 612 computes the average value of output signal S4 of subtractor 610.

Like peak value computation unit 611, average value computation unit 612 may also be realized with an IIR filter or another filter circuit. Also, by setting the values of the coefficients in the coefficient multiplication part of the filter circuit to appropriate values, it is possible to replace the multiplication operation in the coefficient multiplication part with a simpler operation, such as a bit shift, addition/subtraction, etc.

Threshold setting part 613 sets threshold S7, which is related to peak value S5 computed by peak value computation unit 611 and to the average value S6 computed by average value computation unit 612.

For example, the difference between peak value S5 and average value S6 may be found and multiplied by a prescribed coefficient to determine the value for threshold S7.

For example, the value of the coefficient may be set to "1/2," "1/4" or another reciprocal of a power of 2. In this way, it is possible to compute the threshold by means of a simple bit shift of the difference between peak value S5 and average value S6.

Also, e.g., the coefficient value may be set to "3/4," "7/8," or another value obtained by subtracting a reciprocal of a power of 2 from "1." In this way, the threshold can be computed with a simple subtraction of the value obtained by multiplying the reciprocal of a power of 2 from the difference between peak value S5 and average value S6 (that is, the value obtained by a bit shift of said difference).

First bit synchronization signal judgment part 614 compares threshold S7 output from threshold setting part 613 and signal S4 output from subtractor 610, and on the basis of the comparison result, determines whether the signal of the signal range corresponding to integration values S2 and S3 that become the computing elements of said signal S4 is a bit synchronization signal.

That is, when signal S4 as the characteristic quantity of the bit synchronization signal is larger than threshold S7, it is determined that the signal of this signal range is a bit synchronization signal, and a "1" is output. On the other hand, if signal S4 is smaller than threshold S7, a "0" is output.

On the basis of the sign of the signal contained in the prescribed range where phase change as bit synchronization signal takes place in the signal range judged to be the bit synchronization signal by first bit synchronization signal judgment part 614, second bit synchronization signal judgment part 615 determines whether the signal in this signal range is the bit synchronization signal. If it is determined that it is the bit synchronization signal, a "1" is output. On the other hand, if it is determined that it is not the bit synchronization signal, a "0" is output.

For example, when a prescribed number of signals having a negative sign appear consecutively in the first period in the signal range (2 wobble periods) judged as the bit synchronization signal in first bit synchronization signal judgment part 614, and a prescribed number of signals having a positive sign appear consecutively in the second period, it is determined by the second bit synchronization signal judgment part 615 that the signal in this signal range is a bit synchronization signal. That is, when the run length of the negative signal in the first half-period and the run length of the positive signal in the second period reach prescribed lengths, respectively, the signal in this signal range is evaluated as a bit synchronization signal.

AND-gate 616 outputs a "1" when both the judgment results of first bit synchronization signal judgment part 614 and second bit synchronization signal judgment part 615 are "1," and it outputs a "0" otherwise.

That is, AND-gate 616 outputs a "1" when the bit synchronization signal is detected from wobble signal Sout, and it outputs a "0" otherwise.

On the basis of the detection result of the bit synchronization signal output from AND-gate 616, bit synchronization signal interpolator 617 predicts the insertion point of the bit synchronization signal in wobble signal Sout, and interpolates a "1" at the predicted insertion point when a "1" signal is not output from AND-gate 616 at the predicted insertion point.

Also, when the output signal from AND-gate 616 at the predicted insertion point is not "1" consecutively for a prescribed number of cycles, bit synchronization signal interpolator 617 outputs a signal indicating that said interpolation of the bit synchronization signal is invalid.

When such a signal is output, a controller (not shown in the figure) for the data recording/reproduction device determines that synchronization between the actual bit synchronization signal contained in the wobble signal and the detected bit synchronization signal is off, and a prescribed treatment is performed to recover the synchronization between the aforementioned two signals.

The signal obtained after interpolation by said bit synchronization signal interpolator 617 is output as bit synchronization signal Bsync demodulated from the wobble signal to wobble demodulator 7.

Flip-flop 618 holds integration value S2 output from flip-flop 608 synchronously with latch pulse LP2 generated by the timing controller, and outputs integration value S8.

Flip-flop 619 holds integration value S8 output from flip-flop 618 synchronously with latch pulse LP2, and outputs integration value S9.

Also, the timing of latch pulse LP2 is controlled by timing controller 632 such that integration values S2 of the periods containing phase change points PA and PB (FIG. 6) of the word synchronization signal predicted on the basis of bit synchronization signal Bsync are held in flip-flops 619 and 618, respectively.

Subtractor 620 subtracts integration value S9 held in flip-flop 619 from integration value S8 held in flip-flop 618, and outputs the difference as signal S10.

That is, signal S10 output from subtractor 620 results from inverting the sign of integration value S9 of the period of phase change point PA and adding it to integration value S8 of the period of phase change point PB.

As shown in FIG. 6(A), the word synchronization signal is characterized by the fact that it has phase change point PA at the same time as phase change point PC of the bit synchronization signal, and it has phase change point PB by 4 wobble periods from said phase change point PA.

Also, as shown in the figure, wobble signal Sout in the vicinity of phase change point PA is negative in sign, while wobble signal Sout in the vicinity of phase change point PB is positive in sign.

Consequently, in the case of an ideal word synchronization signal, the integration value over the period containing phase change point PA will be negative and the integration value over the period containing phase change point PB will be positive, so that if said integration values of the word synchronization signal are input to subtractor 620, the output signal S10 will have the maximum positive value.

That is, output signal S10 of subtractor 620 is determined in the following operation: in the signal range (5 wobble periods containing predicted phase change points PA and PB) obtained by insertion in wobble signal Sout in place of the detected bit synchronization signal, the prescribed sign assignment operations are performed on the integration values S2 during the periods where a phase change of the word synchronization signal takes place (the initial period and the last period from said 5 wobble periods) (sign of the integration value S9 of the initial period is inverted, the sign of the integration value S8 of the last period is not inverted), and their sum is computed as the output signal S10. Then, when a pattern having characteristic features in agreement with those of the word synchronization signal appears in the signal pattern of the wobble signal, the operation results in the maximum positive value.

In this way, output signal S10 of subtractor 620 has the property that its value becomes larger with respect to a signal pattern similar to the characteristic features of the word synchronization signal, and this is the characteristic quantity of the word synchronization signal.

First word synchronization signal judgment part 621 compares the characteristic quantity of the word synchronization signal output as signal S10 from subtractor 620 with the characteristic quantity of the bit synchronization signal output as signal S4 from subtractor 610, and on the basis of the comparison result, determines whether the signal of the signal range corresponding to integration values S8 and S9 as the computing elements of said signal S10 is a word synchronization signal.

That is, when characteristic quantity S10 of the word synchronization signal is larger than characteristic quantity S4 of the bit synchronization signal, it is determined that the signal in the signal range is a word synchronization signal, and a "1" is output, and when signal S10 is less than signal S4, a "0" is output.

In the signal range judged to be a word synchronization signal by first word synchronization signal judgment part 621, on the basis of the sign of the signal contained in the prescribed range where the phase change as word synchronization signal should take place, second word synchronization signal judgment part 622 determines whether the signal of said signal range is a word synchronization signal. If it is judged to be a word synchronization signal, a "1" is output. If it is judged not to be a word synchronization signal, a "0" is output.

For example, when a prescribed number of signals having a negative sign appear consecutively during the initial period (the period containing phase change point PA) of the signal range (5 wobble periods) judged as the word synchronization signal with first word synchronization signal judgment part 621, and a prescribed number of signals having a positive sign appear consecutively during the last period (the period containing phase change point PB), said second word synchronization signal judgment part 622 determines that the signal of this signal range is a word synchronization signal. That is, when the run length of the negative signal in the initial period and the run length of the positive signal in the last period reach prescribed lengths, respectively, it is determined that the signal of this signal range is a word synchronization signal.

AND-gate 623 outputs a "1" when both the judgment results of first word synchronization signal judgment part 621 and second word synchronization signal judgment part 622 are "1," and it outputs a "0" otherwise.

That is, AND-gate 623 outputs a "1" when a word synchronization signal is detected from wobble signal Sout, and a "0" otherwise.

On the basis of the detection result of the word synchronization signal output from AND-gate 623, word synchronization signal interpolator 624 predicts the insertion point of the word synchronization signal in wobble signal Sout, and when a "1" is not output from AND-gate 623 at the predicted insertion point, a "1" is interpolated at the predicted insertion point.

Also, when the output signal of AND-gate 623 does not contain a "1" consecutively for a prescribed number of cycles, word synchronization signal interpolator 624 outputs a signal that indicates that the interpolation of the word synchronization signal is invalid.

When this signal is output, the controller (not shown in the figure) of the data recording/reproduction device determines that the synchronization between the actual word synchronization signal contained in the wobble signal and the detected word synchronization signal is off, and a prescribed process is performed to recover the synchronization between the two word synchronization signals.

The signal obtained by interpolation processing in word synchronization signal interpolator 624 is output as word synchronization signal Wsync demodulated from the wobble signal to wobble demodulator 7.

Flip-flop 625 holds integration value S2 output from flip-flop 608 synchronously with latch pulse LP3 generated by the timing controller, and outputs it as integration value S 11.

Flip-flop 626 holds integration value S11 output from flip-flop 625 synchronously with latch pulse LP3, and outputs it as integration value S12.

Also, the timing of latch pulse LP3 is controlled by timing controller 632 such that integration value S2 over the periods containing phase change points PG and PH (FIG. 6(C)) of the bit signal of "1" predicted on the basis of bit synchronization signal Bsync are held in flip-flops 626 and 625, respectively.

Subtractor 627 subtracts integration value S12 held in flip-flop 626 from integration value S11 held in flip-flop 625, and the difference is output as signal S13.

That is, signal S13 output from subtractor 627 is obtained by inverting the sign of integration value S12 over the period with phase change point PG and adding it to integration value S11 over the period with phase change point PH.

As shown in FIG. 6(C), the bit signal "1" is characterized by the fact that it has phase change point PG at 4 wobble periods from phase change point PC of the bit synchronization signal, and it has phase change point PH at 2 wobble periods from said phase change point PG.

Also, as shown in the figure, wobble signal Sout in the vicinity of phase change point PG is negative in sign, while wobble signal Sout in the vicinity of phase change point PH is positive in sign.

Consequently, in the case of an ideal bit signal of "1," the integration value over the period with phase change point PG will be negative, and the integration value over the period with phase change point PH will be positive. Said integration value of the bit signal of "1" is input to subtractor 627, its output value S13 is the maximum positive value.

That is, output signal S13 of subtractor 627 is computed as follows: in the signal range (3 wobble periods containing predicted phase change points PG and PH) of the bit signal "1" obtained by insertion in the wobble signal Sout synchronously with the detected bit synchronization signal, prescribed sign operations are performed on integration value S2 during the periods where a phase change of the bit signal "1" should take place (the first period and the last period of said 3 wobble periods), respectively, (sign inversion for integration value S12 in the initial period, and non-inversion as the sign operation for integration value S11 of the last period), and the sum is computed. The computation result is the maximum positive value when a pattern in agreement with the aforementioned characteristic features of the bit signal "1" appears in the signal pattern of the wobble signal.

In this way, output signal S13 of subtractor 627 has the property that its value is larger for the signal pattern similar in characteristic features to the bit signal "1," and it is a characteristic quantity of the bit signal "1."

Flip-flop 628 holds integration value S2 output from flip-flop 608 synchronously with latch pulse LP4 generated by the timing controller, and outputs it as integration value S 14.

Flip-flop 629 holds integration value S14 output from flip-flop 628 synchronously with latch pulse LP4, and outputs it as integration value S15.

Also, the timing of latch pulse LP4 is controlled by timing controller 632 such that integration value S2 over the periods containing phase change points PE and PF (FIG. 6(B)) of the bit signal "0" predicted on the basis of bit synchronization signal Bsync is held in flip-flops 629 and 628.

Subtractor 630 subtracts integration value S15 held in flip-flop 629 from integration value S14 held in flip-flop 628, and the result of subtraction is output as signal S16.

That is, signal S16 output from subtractor 630 is obtained by means of sign inversion of integration value S15 over the period of phase change point PE and adding the result to integration value S14 over the period of phase change point PF.

As shown in FIG. 6(B), the bit signal "0" is characterized by the fact that it contains phase change point PE that is 6 wobble periods from phase change point PC of the bit synchronization signal, and at the same time, it contains phase change point PF that is 2 wobble periods from said phase change point PE.

Also, as shown in the figure, wobble signal Sout in the vicinity of phase change point PE has a negative sign, while wobble signal Sout in the vicinity of phase change point PF has a positive sign.

Consequently, in the case of an ideal word bit signal "0," the integration value over the period containing phase change point PE is negative, the integration value over the period containing phase change point PF is positive, and when said integration values of the bit signal "0" are input to subtractor 630, the output signal S16 will be the maximum positive value.

That is, output signal S16 of subtractor 630 is determined in the following way: in the signal range (3 wobble periods containing predicted phase change points PE and PF) obtained by insertion in wobble signal Sout synchronously with the detected bit synchronization signal, the prescribed sign operations are performed on the integration values S2 for the periods where a phase change takes place as the bit signal "0" (the initial period and the last period of said 3 wobble periods) (sign inversion is performed for integration value S15 of the initial period, and non-inversion sign operation is performed for integration value S14 of the last period), and their sum is computed. Then, when a pattern having characteristic features that agree with those of the bit signal "0" appears in the signal pattern of the wobble signal, the result will be the maximum positive value.

In this way, output signal S16 of subtractor 630 has the property that its value becomes larger with respect to the signal pattern similar to the characteristic features of the bit signal "0," and it is a characteristic quantity of the bit signal "0."

Bit value judgment part 631 compares the characteristic quantity of the bit signal "1" output as signal S13 from subtractor 627 with the characteristic quantity of the bit signal "0" output as signal S16 from subtractor 630, and on the basis of the comparison result, it determines whether the value of the bit signal inserted synchronously with the detected bit synchronization signal is "1" or "0." When it is determined that the value of the bit signal is "1," a "1" is output, and if it is determined that the value of the bit signal is "0," a "0" is output.

The output signal of bit value judgment part 631 is output as bit signal Bdat demodulated from the wobble signal to wobble decoding part 7.

On the basis of wobble clock signal CKw reproduced with wobble clock reproduction part 63 (to be explained below) and bit synchronization signal Bsync output from bit synchronization signal interpolator 617, timing controller 632 generates said latch pulses LP1-LP4.

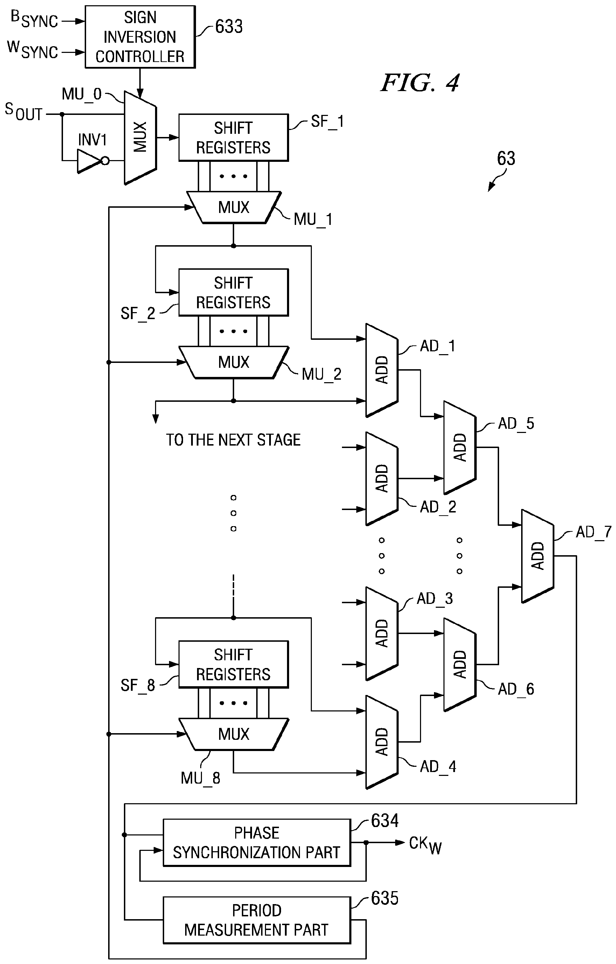

FIG. 4 is a block diagram illustrating an example of the constitution of wobble clock reproduction part 63 in wobble reproduction part 6.

Wobble clock reproduction part 63 reproduces the carrier component of wobble signal Sout output from pre-processor 61, and outputs the result as wobble clock signal CKw.

Wobble clock reproduction part 63 shown as an example in FIG. 4 has sign inverter INV1, selector MU_0-MU_8, shift registers SF_1-SF_8, adders AD_1-AD_7, sign inversion controller 633, phase synchronization part 634, and period measurement part 635.

Here, the unit containing shift registers SF_1-SF_8 is an implementation of the delay signal generating means of the present embodiment.

The unit containing adders AD_1-AD_7 is an implementation of the adder means of the present embodiment.

Period measurement part 635 is an implementation of the period measurement means of the present embodiment.

The unit containing selection part MU_0, sign inverter INV1, and sign inversion controller 633 is an implementation of the sign inversion means of the present embodiment.

Sign inverter INV1 inverts the sign of wobble signal Sout output from pre-processor 61.

Selection part MU_0 selects either wobble signal Sout or the output signal of sign inverter INV1 according to the control of sign inversion controller 633.

On the basis of bit synchronization signal Bsync and word synchronization signal Wsync demodulated from the wobble signal, sign inversion controller 633 predicts the phase change points (PC, PD) of the bit synchronization signal and the phase change points (PA, PB) of the word synchronization signal, and switches the selection of the signal in selection part MU_0 at the predicted phase change point.

Shift register SF_i (i represents an integer of 1-8) has a circuit composed of plural flip-flops connected in series and holding the signal synchronized to the write clock signal of write clock generating part 9, and the wobble signal output from selection part MU_i-1 is input to the initial stage of said series-connected circuit. As a result, the wobble signal input to the initial stage of the series-connected circuit is sequentially shifted as it passes through the various stages.

The number of stages in the series-connected circuit is selected such that the delay of the wobble signal output from the final stage with respect to the wobble signal input to the initial stage is longer than wobble period Tw. As explained above, wobble period Tw is 32 times the period T of the write clock signal. Consequently, the number of stages in the series-connected circuit is set to at least 32. In this example, the number of stages in the series-connected circuit is 36.

For example, in the 8 stages of the flip-flops from the 28^{th} to the 36^{th} stage of said 36-stage flip-flops, the hold signal is output to selection part MU_i. As a result, with the 32^{nd} stage at the center, delay signals having 8 different delays are output from the 28^{th} to 36^{th} stages of the flip-flops to selection part MU_i.

Selection part MU_i selects and outputs a delay signal corresponding to the measurement result of period measurement part 635 from the delay signals output from said 8 stages of the flip-flops of shift register SF_i.
Adder AD_1 adds the output signals of selection part MU_1 and MU_2.
Adder AD_2 adds the output signals of selection part MU_3 and MU_4.
Adder AD_3 adds the output signals of selection part MU_5 and MU_6.
Adder AD_4 adds the output signals of selection part MU_7 and MU_8.
Adder AD_5 adds the output signals of selection part MU_1 and MU_2.
Adder AD_6 adds the output signals of selection part MU_3 and MU_4.
Adder AD_7 adds the output signals of selection part MU_5 and MU_6.

Consequently, the output of adder AD_7 is the sum of all of the output signals from selection part MU_1-MU_8.

Phase synchronization part 634 generates wobble clock signal CKw synchronously with the signal output from adder AD_7.

Period measurement part 635 measures the period of the signal output from adder AD_7. Then, when a deviation in the measurement period takes place with respect to the delay time of the wobble signal propagating from the input of shift register SF_i to the output of selection part MU_i, by means of switching the selection of the signal in selection part MU_i, the delay time will be adjusted to correct for this deviation.

The write operation in the optical disk of the present embodiment will be explained below as an operation of the data recording/reproduction device having the constitution shown in FIGS. 1-4 above.

In the data write operation, the laser beam for control signal generation is irradiated on optical disk 1, and the reflected light is converted by optical pickup 2 into an electronic signal. Analog front end part 3 performs A/D conversion, wave shaping, and other processes on the electronic signal to generate the tracking error signal, focusing error signal, wobble signal, and other control signals. On the basis of said control signals, servo-controller 13 controls the actuators of disk motor 16 and optical pickup 2, and guides the laser beam of optical pickup 2 to the target write position on optical disk 1.

Pre-processor 61 of wobble demodulator 6 performs sampling rate conversion, offset removal, gain control, and other pretreatment processes on said wobble signal output from analog front end part 3, and the resulting signal is output as wobble signal Sout to wobble clock reproduction part 63 and demodulation processing part 62.

Wobble signal Sout input to wobble clock reproduction part 63 performs sign inversion according to the control of sign inversion controller 633.

On the basis of demodulated bit synchronization signal Bsync and word synchronization signal Wsync, sign inversion controller 633 predicts the phase change points (PA, PB, PC, PD) that can be generated in wobble signal Sout, and inverts the sign of wobble signal Sout at the predicted phase change point. For example, the sign of wobble signal Sout is inverted in the 2 wobble periods (bit synchronization signal) from phase change point PC to PD, and in the 4 wobble periods (word synchronization signal) from phase change point PA to PB.

As a result, the phase inverted portion of the wobble signal input to shift register SF_1 becomes smaller, and the phase of the wobble signal becomes more uniform and similar to the waveform of the carrier component. Consequently, the amplitude of the carrier component in the output signal of adder ADD7 increases, and it is possible to reproduce wobble clock signal CKw more reliably.

The wobble signal with a more uniform phase by means of said sign operation is then input to the series-connected 8-stage delay unit with each delay unit composed of shift register SF_i and selection part MU_i. It then passes from the initial to the final stage of the delay units.

If the propagation delay of each delay unit and the carrier component of the wobble signal input to the delay unit have the same period, the carrier components in the delay signals output from the delay units have the same phase. Consequently, in the signal output from adder AD_7 as a result of addition of the 8 delay signals, the amplitude of the carrier component is increased by about 8 times, and the out-phase noise component is attenuated.

The aforementioned signal with enhanced carrier component is input to phase synchronization part 634, which generates wobble clock signal CKw locked to the phase of said signal. Thus, wobble clock signal CKw is produced, which is synchronized with the carrier component of the wobble signal.

Also, period measurement part 635 measures the period of the signal having the carrier component enhanced, and monitors deviation in the prediction period with respect to the propagation delay of each delay unit. When the deviation exceeds a prescribed range, by switching the selection of the signal in selection part MU_i, the delay of each delay unit is adjusted and the deviation is corrected.

In this way, even when the period of the carrier component of the wobble signal is different from the predicted period, it is still possible to generate an appropriate delay signal matched to the period of the actual carrier component. Consequently, it is possible to suppress a reduction in the amplitude of the carrier component in the output signal from adder AD_7.

On the other hand, wobble signal Sout input to demodulation processing part 62 is integrated in adder 606 and flip-flop 607, and its integration value S2 is held in flip-flop 608 for each wobble period synchronously with said wobble clock signal CKw.

Said integration value S2 is sequentially input to flip-flop 609 and subtractor 610, and the integration value of the first period of the two adjacent wobble periods is subtracted from the integration value of the second period to compute characteristic quantity S4 of the bit synchronization signal.

In peak value computation unit 611, average value computation unit 612, and threshold setting part 613, the peak value and average value of said characteristic quantity S4 is calculated with an IIR filter, etc., and appropriate threshold S7 is set corresponding to the computed peak value and average value. For example, a prescribed coefficient is multiplied by the difference between the peak value and average value, and the obtained value is used to set threshold S7.

Then, first bit synchronization signal judgment part 614 compares characteristic quantity S4 with threshold S7, and on the basis of the result of the comparison, it is determined whether the signal of the signal range corresponding to the integration value of the computing element of characteristic quantity S4 is the bit synchronization signal.

It is still possible to obtain a reliable judgment result, even when there is a significant change in the amplitude of the wobble signal, since the threshold varies with the variation in characteristic quantity S4.

In addition, the operation of second bit synchronization signal judgment part 615 is based on the sign of the signal with respect to the signal determined to be the bit synchronization signal in first bit synchronization signal judgment part 614. That is, the signal in the signal range is determined to be the bit synchronization signal when a prescribed number of consecutive negative signals appear in the first period in the signal range of 2 wobble periods judged to be the bit synchronization signal (containing phase change point PC), and a prescribed number of consecutive positive signals appear in the second period (containing phase change point PD).

Then, once both first bit synchronization signal judgment part 614 and second bit synchronization signal judgment part 615 judge the bit synchronization signal, the final judgment is made that the signal of the signal range is the bit synchronization signal, and a "1," indicating the bit synchronization signal, is output from AND-gate 616.

In this way, different judgment methods are used to strictly determine the bit synchronization signal. Consequently, even when a large noise component is superimposed on the wobble signal, it is possible to keep the risk of misjudging the noise component as the bit synchronization signal to a lower level.

Also, as a result of said strict judgment, if the signal that should have been detected as the bit synchronization signal was not detected, on the basis of the series of detection results, bit synchronization signal interpolator 617 interpolates the bit synchronization signal ("1" signal) in the output signal of AND-gate 616, and the result is output as bit synchronization signal Bsync of the demodulation result.

That is, on the basis of a series of detection results, the insertion point of the bit synchronization signal in wobble signal Sout is predicted, and when a "1" is not output from AND-gate 616 at the predicted insertion point, a "1" is interpolated at the predicted insertion point.

As a result, even if there is a failure to detect the bit synchronization signal due to rapid variations in the wobble signal, etc., it is still possible to demodulate the bit synchronization signal with a reliable, constant period.

When the bit synchronization signal is not detected consecutively for a prescribed number of cycles at the predicted insertion point, bit synchronization signal interpolator 617 outputs a signal that indicates that the interpolation of the bit synchronization signal is invalid. As a result, a process for recovering synchronization between the actual bit synchronization signal and the detected bit synchronization signal is executed by a controller (not shown in the figure) of the data recording/reproduction device.

In this way, when bit synchronization signal Bsync is demodulated, it is possible to predict the phase change points (PA, PB) of the word synchronization signal and the phase change points (PE, PF, PG, PH) of the bit signal obtained by insertion in the wobble signal on the basis of the timing.

Flip-flops 618, 619 and subtractor 620 hold the integration values of predicted phase change points PA and PB from the integration values sequentially output from flip-flop 608 at timing of latch pulse LP2, and the integration value of phase change point PA is subtracted from the held integration value of said phase change point PB. As a result, characteristic quantity S10 of the word synchronization signal is calculated.

Then, first word synchronization signal judgment part 621 compares characteristic quantity S10 of the word synchronization signal and characteristic quantity S4 of the bit synchronization signal, and on the basis of the comparison result, determines whether the signal of the signal range corresponding to the integration value of the computing element of said signal S10 is the word synchronization signal.

In this way, the determination of the word synchronization signal is performed on the basis of the result of comparison of the characteristic quantities of the bit synchronization signal and the word synchronization signal. Consequently, the judgment can be performed with greater precision than the judgment method that uses only the characteristic quantity of the word synchronization signal (for example, the judgment method based on the threshold as the characteristic quantity, etc.).

In addition, second word synchronization signal judgment part 622 performs its judgment on the basis of the sign of the signal for the signal judged to be the word synchronization signal in said first word synchronization signal judgment part 621. That is, when a prescribed number of consecutive negative signals appear during the initial period (the period containing phase change point PA) of the signal range of 5 wobble periods judged to be the word synchronization signal, and a prescribed number of consecutive positive signals appear during the last period (the period containing phase change point PB), the signal in the signal range is judged to be the word synchronization signal.

Then, once both first word synchronization signal judgment part 621 and second word synchronization signal judgment part 622 judge the word synchronization signal, the final judgment is made that the signal of the signal range is the word synchronization signal, and a "1," indicating the word synchronization signal, is output from AND-gate 623.

In this way, like the case of the bit synchronization signal, different judgment methods are adopted to strictly determine the word synchronization signal. Consequently, even when a large noise component is superimposed on the wobble signal, it is possible to reduce the risk that the noise component will be mistaken for a word synchronization signal.

Also, as a result of said strict judgment, if the signal that should be detected as word synchronization signal is not detected, on the basis of the series of detection results, word synchronization signal interpolator 624 interpolates the word synchronization signal ("1" signal) in the output signal of AND-gate 623, and the result is output as word synchronization signal Wsync of the demodulation result.

That is, on the basis of a series of detection results, the insertion point of the word synchronization signal in wobble signal Sout is predicted, and when a "1" is not output from AND-gate 623 at the predicted insertion point, a "1" is interpolated at the predicted insertion point.

As a result, even when there is a failure to detect the word synchronization signal due to rapid variations in the wobble signal, etc., it is still possible to demodulate the word synchronization signal with a reliable, constant period.

When the word synchronization signal is not detected consecutively for a prescribed number of cycles at the predicted insertion point, word synchronization signal interpolator 624 outputs a signal that indicates that the interpolation of the word synchronization signal is invalid. As a result, a process for recovering the synchronization between the actual word synchronization signal and the detected word synchronization signal is executed by a controller (not shown in the figure) of the data recording/reproduction device.

Flip-flops 625, 626 and subtractor 627 hold the integration values of predicted phase change points PG and PH from the integration values sequentially output from flip-flop 608 at the timing of latch pulse LP3, and the integration value of phase change point PG is subtracted from the held integration value of said phase change point PH. As a result, characteristic quantity S 13 of the bit signal "1" is calculated.

Similarly, flip-flops 628, 629 and subtractor 630 hold the integration values of predicted phase change points PE and PF from the integration values sequentially output from flip-flop 608 at the timing of latch pulse LP4, and the integration value of phase change point PE is subtracted from the held integration value of said phase change point PF. As a result, characteristic quantity S16 of the bit signal of "0" is calculated.

Then, bit value judgment part 631 compares characteristic quantity S13 of the bit signal "1" and characteristic quantity S16 of the bit signal "0," and, on the basis of the comparison result, determines whether the value of the bit signal inserted synchronously with the detected bit synchronization signal is "1" or "0."

In this way, the judgment of the bit value is performed on the basis of the result of comparison of the characteristic quantities of the bit signals "1" and "0." Consequently, the judgment can be performed with greater precision than the judgment method that uses the characteristic quantity of only one (for example, the judgment method based on the threshold as the characteristic quantity, etc.).

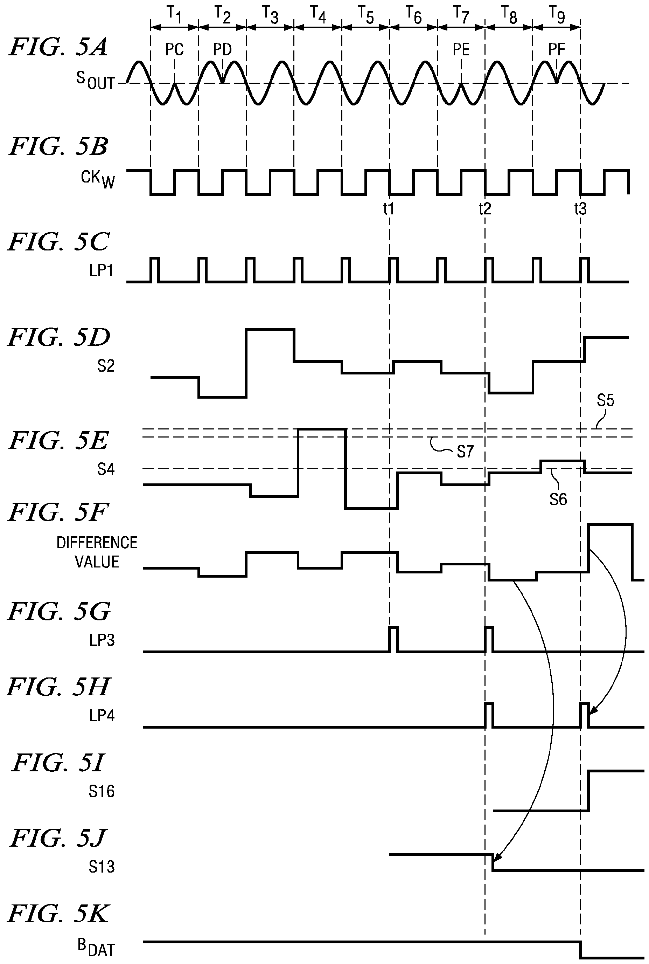

FIG. 5 is a waveform diagram illustrating an example of the waveforms of the various portions of demodulation processing part 62 when the bit signal "0" is input.

FIG. 5(A) shows wobble signal Sout; FIG. 5(B) shows wobble clock signal CKw; FIG. 5(C) shows latch pulse LP1; FIG. 5(D) shows integration value S2; FIG. 5(E) shows characteristic quantity S4 of the bit synchronization signal; FIG. 5(G) shows latch pulse LP3; FIG. 5(H) shows latch pulse LP4; FIG. 5(I) shows the characteristic quantity S16 of the bit signal of "0"; FIG. 5(J) shows characteristic quantity S13 of the bit signal of "1"; and FIG. 5(K) shows demodulated bit signal Bdat.

Also, FIG. 5(F) shows the difference value obtained by subtracting the integration value of the former period from the integration value of the latter period. This difference value is the maximum positive value with respect to the signal pattern of the bit signal having the phase change points separated from each other by 2 wobble periods (PE and PF, or PG and PH).

As shown in FIG. 5(A), wobble signal Sout contains the signal pattern of the bit synchronization signal characterized with two phase change points (PC, PD) separated from each other by 1 wobble period in periods T1 and T2. Consequently, characteristic feature S4 of the bit synchronization signal exceeds threshold S7 (FIG. 5(E)) in period T4 when the result of subtraction of the integration value of period T1 from the integration value of period T2 is output.

It is predicted that phase change points PG and PH of the bit signal "1" with respect to the bit synchronization signal are contained in periods T5 and T7, respectively. Consequently, timing controller 632 outputs latch pulse LP3 at times t1 and t2 such that integration values S2 of periods T5 and T7 are held in flip-flops 626 and 625, respectively (FIG. 5(G)).

Also, it is predicted that phase change points PE and PF of the bit signal of "0" with respect to the bit synchronization signal are contained in periods T7 and T9. Consequently, timing controller 632 outputs latch pulse LP4 at times t2 and t3 so that integration values S2 of periods T7 and T9 are held in flip-flops 629 and 628, respectively (FIG. 5(H)).

Since characteristic quantity S13, the difference between the integration values held in flip-flops 626 and 625 according to latch pulse LP3, and characteristic quantity S16, the difference between the integration values held in flip-flops 629 and 628 according to latch pulse LP4, are compared at time t3 when both values are determined, as shown in FIGS. 5(I) and (J), characteristic quantity S16 is larger than characteristic quantity S13. Consequently, bit value judgment part 631 determines that the value of the bit signal inserted synchronously with the bit synchronization signal in periods T1 and T2 is "0," and bit signal Bdat of "0" is output (FIG. 5(K)).

As explained above, in wobble demodulator 6, while wobble clock signal CKw is reproduced from the wobble signal output from analog front end part 3, bit synchronization signal Bsync, word synchronization signal Wsync and bit signal Bdat are demodulated.

Write clock generating part 9 multiplies reproduced wobble clock signal CKw by a prescribed multiplier to generate the write clock signal. Also, wobble demodulator 7 performs the prescribed demodulation treatment for the demodulation signal of wobble demodulator 6, and the address information of optical disk 1 is reproduced.

Synchronously with the generated write clock signal, write data encoding part 8 performs the prescribed encoding processing for the write data supplied from a host device (not shown in the figure) and generates a write pulse row. Then, the write pulse row is output to write pulse generating part 10 at a timing corresponding to the address information reproduced by wobble demodulator 7.

Write pulse generating part 10 performs the prescribed processing, which matches the characteristics of the disk as the object to be written to, for the input write pulse row to generate a write pulse signal, which is output to laser drive part 11.

Laser drive part 11 drives the laser light source of optical pickup 2 corresponding to the write pulse signal to generate a laser beam for writing.

With the aforementioned operation, the laser beam is irradiated corresponding to the write data supplied from the host device (not shown in the figure) at the target write site on optical disk 1, and a data write operation is carried out.

As explained above, in this embodiment, by means of wobble demodulator 6, in the signal range of the bit signal obtained by insertion synchronously with detected bit synchronization signal Bsync, prescribed sign operations are performed on the integration values S2 of the wobble signal in the periods where phase changes should take place as bit signal, and the sum is determined. As a result, characteristic quantity S13 of the bit signal "1" and characteristic quantity S16 of the bit signal "0" are computed, respectively. On the basis of the result of comparison of the characteristic quantities of the bit values computed as described above, the bit value of the bit signal corresponding to detected bit synchronization signal Bsync is determined.

In this way, the judgment of the bit value is performed on the basis of the result of comparison of the characteristic quantities of the bit signals "1' and "0." Consequently, compared with the conventional method, in which the integration value of the wobble signal is compared with a fixed threshold, it is possible to reduce the risk of misjudging the bit value due to variations in the signal, etc., and it is possible to demodulate the bit signal with greater precision.

Also, characteristic quantity S4 of the bit synchronization signal is computed by performing prescribed sign operations on the integration values S2, respectively, during the periods where a phase change of the bit synchronization signal should take place in the signal range of the bit synchronization signal obtained by insertion in the wobble signal and finding the sum. Also, the threshold for judging the bit synchronization signal can be set corresponding to the peak value and average value of the characteristic quantity of the bit synchronization signal computed as described above. Then, on the basis of comparison between the computed characteristic quantity of the bit synchronization signal and the set threshold, it is determined whether the signal of the signal range is a bit synchronization signal.

In this way, the threshold for judging the bit synchronization signal is adjusted to track the bit synchronization signal and is kept at an appropriate value. Consequently, even when the amplitude of the wobble signal varies significantly, it is still possible to demodulate the bit synchronization signal with greater precision.

In addition, output signal S10 of word synchronization signal is determined by the following operation: in the signal range of the word synchronization signal obtained by insertion in place of detected bit synchronization signal Bsync, prescribed sign operations are performed on integration values S2 in the periods where a phase change as word synchronization signal should take place, respectively, and the results are summed to obtain said characteristic quantity. On the basis of the comparison between said computed characteristic quantity S10 of the word synchronization signal and characteristic quantity S4 of the bit synchronization signal, it is determined whether the signal of the signal range is the word synchronization signal.

In this way, on the basis of the result of comparison between the characteristic quantities of the bit synchronization signal and the word synchronization signal, the word synchronization signal is determined. Consequently, compared with the conventional method of comparing the integration value of the wobble signal and the fixed threshold, it is possible to reduce the risk of misjudging the bit value due to variations in the signal, etc., and it is possible to demodulate the word synchronization signal with greater precision.

Also, for the bit synchronization signal and word synchronization signal are determined for the periods in which a phase change takes place, and a final determination of the bit synchronization signal and word synchronization signal is made on the basis of whether a signal having a prescribed sign appears for a prescribed number of consecutive cycles.

In this way, by performing a strict judgment using different judgment methods, it is possible to reduce the risk of misjudging noise as a bit synchronization signal or a word synchronization signal to a lower level.

Also, a delay signal made up of multiple delays corresponding to an integer multiple of the periods of the carrier component is added to the wobble signal. Consequently, even when a large amount of noise is superimposed on the wobble signal, it is still possible to attenuate the noise component, to extract the carrier component, and to reproduce wobble clock signal CKw synchronized to it.

The present invention is not limited to the aforementioned embodiment, and various improvements can be performed.

For example, the aforementioned embodiment pertains to a type of data recording/reproduction device for optical disks. However, the present invention is not limited in this way. It may also be applied to data recording/reproduction devices using recording media other than optical disks (such as photomagnetic tapes, photomagnetic disks, etc.). Also, the present invention may also be applied to the data recorders with a data reproduction function.

In the aforementioned embodiment, an example was given in which the demodulator of the present invention is used in the wobble demodulating part in the data recording/reproduction device of an optical disk. However, it may also be applied to communication devices, and various other devices and systems that demodulate phase modulated signals.

### REFERENCE NUMERALS AND SYMBOLS AS SHOWN IN THE DRAWINGS

In the figures, 1 represents optical disk, 2 represents optical pickup, 3 represents analog front end part, 4 represents clock reproduction part, 5 represents read data decoder, 6 represents wobble demodulator, 7 represents wobble decoder, 8 represents write data encoder, 9 represents write clock generator, 10 represents write pulse generator, 12 represents interface part, 13 represents servo-controller, 14 represents actuator driver, 15 represents rotary motor driver, 16 represents disk motor, 601 represents sampling rate converter, 602 represents offset detector, 603 represents offset removal part, 604 represents gain controller, 606 represents adder, 610, 620, 627, 630 represent subtractors, 607-609, 618, 619, 625, 626, 628, 629 represent flip-flops, 611 represents peak value computation unit, 612 represents average value computation unit, 613 represents threshold setting part, 614 represents first bit synchronization signal judgment part, 615 represents second bit synchronization signal judgment part, 621 represents first word synchronization signal judgment part, 622 represents second word synchronization signal judgment part, 631 represents bit value judgment part, 616, 623 represent AND-gates, 617 represents bit synchronization signal interpolator, 624 represents word synchronization signal interpolator, 631 represents timing controller, 633 represents sign inversion controller, 634 represents phase synchronization part, 635 represents period measurement part, INV sign inverter, MU_0-MU_8 represent selection parts, SF_1-SF_8 represent shift registers, and AD_1-AD_7 represent adder.

## Claims

1. A demodulator for demodulating a phase modulated signal containing a bit synchronization signal that is inserted periodically by means of a phase change and a bit signal that is inserted synchronously with said bit synchronization signal for a predetermined interval thereafter and that has a signal pattern corresponding to a bit value defined by said bit signal, wherein the demodulator comprises the following means:
a carrier reproduction means (63) for reproducing the carrier component of said phase modulated signal;
an integration value computation means (606, 607, 608) for computing the integration value over a period of said phase modulated signal or the integration values over plural sequential periods synchronously with said reproduced carrier component;
a bit synchronization signal detection means for detecting said bit synchronization signal inserted in said phase modulated signal, said bit synchronization signal detection means including phase change detection means for detecting said phase change of said phase modulated signal; and
a bit signal integration value summing means (625,...,630), **characterized in that**:
said phase change detection means comprises:
subtraction means (610) arranged to receive an integration value (S2) and a previous integration value (S3) and to compute a difference value (S4) by subtracting said previous integration value from said integration value;
a threshold setting means (613) for setting a threshold value corresponding to the difference between a peak value (S5) and an average value (S6) of said difference value; and
bit synchronization judgment means (614) for comparing said difference value with said set threshold value and for determining whether said phase change has been detected on the basis of said comparison result;
a bit signal integration value summing means (625,...,630) configured to process the signal pattern of said predetermined interval by computing two sums (S13, S16, each of the two sums being obtained by adding the integration values of subsequent periods (S11, S12, S 14, S 15) after assigning signs to said integration values, said signs being prescribed by the characteristic phase changes of the respective signal patterns which represent the two possible bit values, respectively; and wherein
said bit value judging means (631) is configured to compare the two sums computed by the bit signal integration value summing means(625,...,630), and to determine the bit value to which the signal pattern defined by said bit signal corresponds on the basis of the comparison result.

2. A demodulator as claimed in Claim 1 **characterized by** the fact that
said threshold setting means is configured to set said threshold on the basis of the value obtained by multiplying a reciprocal of a power of 2 by the difference between the peak value and average value of said difference value, or the value obtained by subtracting said multiplication value from said difference.

3. A demodulator as claimed in Claim 1 or 2 including:
a second synchronization judgment means (615) for determining whether the phase change judged by the synchronization judgment means is the phase change to be detected on the basis of the sign of the difference value.

4. A demodulator as claimed in Claim 3 **characterized by** the fact that
said second synchronization judgment means is configured to determine whether the phase change judged by the synchronization signal judgment means is the phase change to be detected on the basis of the number of consecutive values of the same sign.

5. A demodulator as claimed in any preceding claim and **characterized in that** it comprises:
a bit synchronization interpolation means (617) for predicting the insertion point of said bit synchronization signal in said phase modulated signal on the basis of the detection result of said bit synchronization circuit, and for interpolating said phase change at said predicted insertion point when said synchronization circuit does not detect a phase change at said predicted insertion point.

6. The demodulator as claimed in Claim 5 **characterized in that**
said synchronization signal interpolation means is configured to output a signal indicating that the interpolation of said bit synchronization signal is invalid when said bit synchronization circuit does not detect said phase change consecutively for a prescribed number of cycles at said predicted insertion points.

7. The demodulator as claimed in any preceding claim **characterized in that** it comprises a word synchronization signal detection means, which is configured to detect a word synchronization signal inserted periodically in said phase modulated signal in place of said bit synchronization signal, and which comprises:
a word synchronization subtraction means (620) arranged to receive a second integration value (S8) and a second previous integration value (S9) and to compute a second difference value (S10) by subtracting said secondprevious integration value from said second integration value; and
word synchronization judgment (621) means for comparing said second difference value with said difference value.

8. A demodulator as claimed in Claim 7 **characterized in that** said word synchronization signal detection means includes a second word synchronization signal judgment means (622) for determining whether the word synchronization signal judged by the word synchronization judgment means is that to be detected on the basis of the sign of the second difference value.

9. The demodulator described in Claim 7 or 8 **characterized in that** it comprises
a word synchronization signal interpolation means (624) for predicting the insertion point of said word synchronization signal in said phase modulated signal on the basis of the detection result of said word synchronization signal detection means, and for interpolating said word synchronization signal in said predicted insertion point when said word synchronization signal detection means does not detect said word synchronization signal at said predicted insertion point.

10. A demodulator as claimed any preceding claim **characterized in that** said carrier reproduction means comprises:
a delay signal generating means (SF_1, SF_2,......SF_8;MU_1,MU_2,......MU_8) for generating plural delay signals for providing plural delays corresponding to an integer multiple of the period of said carrier component in said phase modulated signal,
and an adder means (AD _1,...... AD_2) for adding the plural delay signals generated by said delay signal generating means.

11. A demodulator as claimed in Claim 10 **characterized in that** said carrier reproduction means contains a period measurement means (635) for measuring the period of said carrier component on the basis of the addition result of said adder means, said delay signal generating means being configured to adjust the delay given to said phase modulated signal corresponding to the measurement result of said period measurement means.

12. A demodulator as claimed in Claim 11 **characterized in that**
said carrier reproduction means contains a sign inverting means(633) for predicting the point where a change of phase can take place in said phase modulated signal on the basis of the detection result of said synchronization circuit and for inverting the sign of said phase modulated signal at said predicted phase change point;
said delay signal generating means being configured to generate the delay signal with said inverted sign.

## Patentansprüche

1. Demodulator zum Demodulieren eines phasenmodulierten Signals, das periodisch ein Bitsynchronisationssignal, das enthält, durch einen Phasenwechsel eingefügt wird, und ein Bitsignal, das synchron zum Bitsynchronisationssignal für ein vorgegebenes Intervall danach eingefügt wird und das ein Signalmuster entsprechend einem vom Bitsignal definierten Bitwert aufweist, (606, 607, 608) wobei der Demodulator die folgenden Mittel umfasst:
ein Trägerreproduktionsmittel (63) zum Reproduzieren der Trägerkomponente des phasenmodulierten Signals;
ein Integrationswert-Berechnungsmittele Periode zum Berechnen des Integrationswerts über eine Perioden des phasenmodulierten Signals oder der Integrationswerte über mehrere aufeinanderfolgende Perioden synchron zur reproduzierten Trägerkomponente;
ein Bitsynchronisationssignal-Erfassungsmittel zum Erfassen des im phasenmodulierten eingefügten Bitsynchronisationssignals, wobei das Bitsynchronisationssignal-Erfassungsmittel ein Phasenwechsel-Erfassungsmittel zum Erfassen des Phasenwechsels des phasenmodulierten Signals umfasst; und
ein Bitsignalintegrationswert-Summierungsmittel (625,...,630), **dadurch gekennzeichnet, dass**
das Phasenwechsel-Erfassungsmittel Folgendes umfasst:
ein zum Empfangen eines Integrationswerts (S2) und eines vorhergehenden Integrationswerts (S3) und zum Berechnen eines Differenzwerts (S4) durch Subtrahieren des vorhergehenden Integrationswerts vom Integrationswert ausgebildetes Subtraktionsmittel (610);
ein Schwelleneinstellmittel (613) zum Einstellen eines Schwellenwerts entsprechend der Differenz zwischen einem Höchstwert (S5) und einem Durchschnittswert (S6) des Differenzwerts; und
ein Bitsynchronisation-Beurteilungsmittel (614) zum Vergleichen des Differenzwerts mit dem eingestellten Schwellenwert und zum Ermitteln, ob der Phasenwechsel erfasst wurde, auf der Basis des Vergleichsergebnisses;
ein zum Verarbeiten des Signalmusters des vorgegebenen Intervalls durch Berechnen von zwei Summen (S13, S16) ausgebildetes Bitsignalintegrationswert-Summierungsmittel (625, ..., 630), wobei jede der zwei Summen durch Addieren der Integrationswerte von aufeinanderfolgenden Perioden (S11, S12, S14, S15) nach dem Zuweisen von Vorzeichen zu den Integrationswerten ermittelt wird, wobei die Vorzeichen von den charakteristischen Phasenwechseln der jeweiligen Signalmuster, die jeweils die zwei möglichen Bitwerte darstellen, vorgegeben werden; und wobei
das Bitwert-Beurteilungsmittel (631) ausgelegt ist zum Vergleichen der zwei vom Bitsignalintegrationswert-Summierungsmittel (625,...,630) berechneten Summen und zum Ermitteln des Bitwerts, dem das vom Bitsignal definierte Signalmuster entspricht, auf der Basis des Vergleichsergebnisses.

2. Demodulator nach Anspruch 1, **dadurch gekennzeichnet, dass** das Schwelleneinstellmittel zum Einstellen der Schwelle auf der Basis des durch Multiplizieren eines Reziprokwerts einer Potenz von 2 mit der Differenz zwischen dem Höchstwert und dem Durchschnittswert des Differenzwerts ermittelten Werts oder des durch Subtrahieren des Multiplikationswerts von der Differenz ermittelten Werts ausgebildet ist.

3. Demodulator nach Anspruch 1 oder 2, umfassend:
ein zweites Synchronisation-Beurteilungsmittel (615) zum Ermitteln, ob der vom Synchronisation-Beurteilungsmittel beurteilte Phasenwechsel der zu erfassende Phasenwechsel ist, auf der Basis des Vorzeichens des Differenzwerts.

4. Demodulator nach Anspruch 3, **dadurch gekennzeichnet, dass** das zweite Synchronisation-Beurteilungsmittel zum Ermitteln, ob der vom Synchronisationssignal-Beurteilungsmittel beurteilte Phasenwechsel der zu erfassende Phasenwechsel ist, auf der Basis der Zahl von aufeinanderfolgenden Werten des gleichen Vorzeichens, ausgebildet ist.

5. Demodulator nach einem der vorhergehenden Ansprüche und **dadurch gekennzeichnet, dass** er Folgendes umfasst:
ein Bitsynchronisation-Interpolationsmittel (617) zum Vorhersagen des Einfügepunkts des Bitsynchronisationssignals im phasenmodulierten Signal auf der Basis des Ermittlungsergebnisses der Bitsynchronisationsschaltung und zum Interpolieren des Phasenwechsels am vorhergesagten Einfügepunkt, wenn die Synchronisationsschaltung keinen Phasenwechsel am vorhergesagten Einfügepunkt feststellt.

6. Demodulator nach Anspruch 5, **dadurch gekennzeichnet, dass** das Synchronisationssignal-Interpolationsmittel zum Ausgeben eines Signals zum Angeben, dass die Interpolation des Bitsynchronisationssignals ungültig ist, wenn die Bitsynchronisationsschaltung den Phasenwechsel aufeinanderfolgend für eine vorgegebene Zahl von Zyklen an den vorhergesagten Einfügepunkten nicht feststellt, ausgebildet ist.

7. Demodulator nach einem der vorhergehenden Ansprüche, **dadurch gekennzeichnet, dass** er ein Wortsynchronisationssignal-Erfassungsmittel umfasst, das zum Erfassen eines periodisch im phasenmodulierten Signal an der Stelle des Bitsynchronisationssignals eingefügten Wortsynchronisationssignals ausgebildet ist, und der Folgendes umfasst:
ein zum Empfangen eines zweiten Integrationswerts (S8) und eines zweiten vorhergehenden Integrationswerts (S9) und zum Berechnen eines zweiten Differenzwerts (S10) durch Subtrahieren des zweiten vorhergehenden Integrationswerts vom zweiten Integrationswert ausgebildetes Wortsynchronisation-Subtraktionsmittel (620); und
ein Wortsynchronisation-Beurteilungsmittel (621) zum Vergleichen des Differenzwerts mit dem Differenzwert.

8. Demodulator nach Anspruch 7, **dadurch gekennzeichnet, dass** das Wortsynchronisationssignal-Erfassungsmittel ein zweites Wortsynchronisationssignal-Beurteilungsmittel (622) zum Ermitteln, ob das vom Wortsynchronisation-Beurteilungsmittel beurteilte Wortsynchronisationssignal das zu Erfassende ist, auf der Basis des Vorzeichens des zweiten Differenzwerts, umfasst.

9. Demodulator nach Anspruch 7 oder 8, **dadurch gekennzeichnet, dass** er ein Wortsynchronisationssignal-Interpolationsmittel (624) zum Vorhersagen des Einfügepunkts des Wortsynchronisationssignals im phasenmodulierten Signal auf der Basis des Erfassungsergebnisses des Wortsynchronisationssignal-Erfassungsmittels und zum Interpolieren des Wortsynchronisationssignals am vorhergesagten Einfügepunkt, wenn das Wortsynchronisationssignal-Erfassungsmittel kein Wortsynchronisationssignal am vorhergesagten Einfügepunkt erfasst, umfasst.

10. Demodulator nach einem der vorhergehenden Ansprüche, **dadurch gekennzeichnet, dass** das Trägerreproduktionsmittel Folgendes umfasst:
ein Verzögerungssignal-Erzeugungsmittel (SF_1, SF_2,......SF_8; MU_1, MU_2,......MU_8) zum Erzeugen von mehreren Verzögerungssignalen zum Bereitstellen von mehreren Verzögerungen entsprechend einem ganzzahligen Vielfachen der Periode der Trägerkomponente im phasenmodulierten Signal,
und ein Addierermittel (AD_1,......AD_2) zum Addieren der vom Verzögerungssignal-Erzeugungsmittel erzeugten mehreren Verzögerungssignale.

11. Demodulator nach Anspruch 10, **dadurch gekennzeichnet, dass** das Trägerreproduktionsmittel ein Perioden-Messmittel (635) zum Messen der Periode der Trägerkomponente auf der Basis des Additionsergebnisses des Addierermittels umfasst, wobei das Verzögerungssignal-Erzeugungsmittel zum Anpassen der jedem phasenmodulierten Signal zugewiesenen Verzögerung entsprechend dem Messergebnis des Perioden-Messmittels ausgebildet ist.

12. Demodulator nach Anspruch 11, **dadurch gekennzeichnet, dass** das Trägerreproduktionsmittel ein Vorzeichen-Umkehrmittel (633) zum Vorhersagen des Punkts im phasenmodulierten Signal, an dem ein Phasenwechsel erfolgen kann, auf der Basis des Erfassungsergebnisses der Synchronisationsschaltung und zum Umkehren des Vorzeichens des phasenmodulierten Signals am vorhergesagten Phasenwechselpunkt umfasst; und
wobei das Verzögerungssignal-Erzeugungsmittel zum Erzeugen des Verzögerungssignals mit dem umgekehrten Vorzeichen ausgebildet ist.

## Revendications

1. Démodulateur pour démoduler un signal modulé en phase contenant un signal de synchronisation de bits qui est inséré de manière périodique au moins d'un changement de phase, et un signal de bit qui est inséré par la suite de manière synchrone avec ledit signal de synchronisation de bits pendant un intervalle prédéterminé et qui présente un motif de signal correspondant à une valeur de bit définie par ledit signal de bit, dans lequel le démodulateur comprend les moyens suivantes :
un moyen de reproduction de porteuse (63) pour reproduire la composante porteuse dudit signal modulé en phase ;
un moyen de calcul de valeur d'intégration (606, 607, 608) pour calculer la valeur d'intégration sur une période dudit signal modulé en phase ou les valeurs d'intégration sur de multiples périodes séquentielles de manière synchrone avec ladite composante porteuse reproduite ;
un moyen de détection de signal de synchronisation de bits pour détecter ledit signal de synchronisation de bits inséré dans ledit signal modulé en phase, ledit moyen de détection de signal de synchronisation de bits comprenant un moyen de détection de changement de phase pour détecter ledit changement de phase dudit signal modulé en phase ; et
un moyen de sommation de valeur d'intégration de signal de bit (625, ..., 630), **caractérisé en ce que** :
ledit moyen de détection de changement de phase comprend :
un moyen de soustraction (610) conçu pour recevoir une valeur d'intégration (S2) et une précédente valeur d'intégration (S3) et pour comparer une valeur de différence (S4) par soustraction de ladite précédente valeur d'intégration de ladite valeur d'intégration ;
un moyen de fixation de seuil (613) pour fixer une valeur de seuil correspondant à la différence entre une valeur de crête (S5) et une valeur moyenne (S6) de ladite valeur de différence ; et
un moyen d'évaluation de synchronisation de bits (614) pour comparer ladite valeur de différence avec ladite valeur de seuil fixée et pour déterminer si ledit changement de phase a été détecté sur la base dudit résultat de comparaison ;
un moyen de sommation de valeur d'intégration de signal de bit (625, ..., 630) configuré pour traiter le motif de signal dudit intervalle prédéterminé par calcul de deux sommes (S13, S16), chacune des deux sommes étant obtenue par ajout des valeurs d'intégration de périodes suivantes (S11, S12, S14, S15) après avoir attribué des signes auxdites valeurs d'intégration, lesdits signes étant prescrits par les changements de phase caractéristiques des motifs de signal respectifs qui représentent les deux valeurs de bit possibles, respectivement ; et dans lequel
ledit moyen d'évaluation de valeur de bit (631) est configuré pour comparer les deux sommes calculées par le moyen de sommation de valeur d'intégration de signal de bit (625, ..., 630) et pour déterminer la valeur de bit à laquelle le motif de signal défini par ledit signal de bit correspond sur la base du résultat de comparaison.

2. Démodulateur selon la revendication 1, **caractérisé par le fait que**
ledit moyen de fixation de seuil est configuré pour fixer ledit seuil sur la base de la valeur obtenue par multiplication d'une réciproque d'une puissance de 2 par la différence entre la valeur de crête et une valeur moyenne de ladite valeur de différence, ou de la valeur obtenue par soustraction de ladite valeur de multiplication de ladite différence.

3. Démodulateur selon la revendication 1 ou 2, comprenant :
un second moyen d'évaluation de synchronisation (615) pour déterminer si le changement de phase évalué par le moyen d'évaluation de synchronisation est le changement de phase qui doit être détecté sur la base du signe de la valeur de différence.

4. Démodulateur selon la revendication 3, **caractérisé par le fait que**
ledit second moyen d'évaluation de synchronisation est configuré pour déterminer si le changement de phase évalué par le moyen d'évaluation de signal de synchronisation est le changement de phase qui doit être détecté sur la base du nombre de valeurs consécutives du même signe.

5. Démodulateur selon l'une quelconque des revendications précédentes, et **caractérisé en ce qu'**il comprend :
un moyen d'interpolation de synchronisation de bits (617) pour prédire le moment d'insertion dudit signal de synchronisation de bits dans ledit signal modulé en phase sur la base du résultat de détection dudit circuit de synchronisation de bits, et pour interpoler ledit changement de phase au niveau dudit moment d'insertion prédit lorsque ledit circuit de synchronisation ne détecte pas un changement de phase au niveau dudit moment d'insertion prédit.

6. Démodulateur selon la revendication 5, **caractérisé en ce que**
ledit moyen d'interpolation de signal de synchronisation est configuré pour transmettre un signal indiquant que l'interpolation dudit signal de synchronisation de bits est invalide lorsque ledit circuit de synchronisation de bits ne détecte pas ledit changement de phase de manière consécutive pendant un nombre prescrit de cycles au niveau desdits moments d'insertion prédits.

7. Démodulateur selon l'une quelconque des revendications précédentes, **caractérisé en ce qu'**il comprend :
un moyen de détection de signal de synchronisation de mots qui est configuré pour détecter un signal de synchronisation de mots inséré de manière périodique dans ledit signal modulé en phase à la place dudit signal de synchronisation de bits, et qui comprend :
un moyen de soustraction de synchronisation de mots (620) conçu pour recevoir une seconde valeur d'intégration (S8) et une seconde précédente valeur d'intégration (S9) et pour calculer une seconde valeur de différence (S10) par soustraction de ladite seconde précédente valeur d'intégration de ladite seconde valeur d'intégration ; et
un moyen d'évaluation de synchronisation de mots (621) pour comparer ladite seconde valeur de différence avec ladite valeur de différence.

8. Démodulateur selon la revendication 7, **caractérisé en ce que**
ledit moyen de détection de signal de synchronisation de mots comprend un second moyen d'évaluation de signal de synchronisation de mots (622) pour déterminer si le signal de synchronisation de mots évalué par le moyen d'évaluation de synchronisation de mots est celui qui doit être détecté sur la base du signe de la seconde valeur de différence.

9. Démodulateur selon la revendication 7 ou 8, **caractérisé en ce qu'**il comprend
un moyen d'interpolation de signal de synchronisation de mots (624) pour prédire le moment d'insertion dudit signal de synchronisation de mots dans ledit signal modulé en phase sur la base du résultat de détection dudit moyen de détection de signal de synchronisation de mots, et pour interpoler ledit signal de synchronisation de mots dans ledit moment d'insertion prédit lorsque ledit moyen de détection de signal de synchronisation de mots ne détecte pas ledit signal de synchronisation de mots au niveau dudit moment d'insertion prédit.

10. Démodulateur selon l'une quelconque des revendications précédentes, **caractérisé en ce que** ledit moyen de reproduction de porteuse comprend :
un moyen de génération de signal de retard (SF_1, SF_2, ..., SF_8 ; MU_1, MU_2, ..., MU_8) pour générer de multiples signaux de retard pour fournir de multiples retards correspondant à un entier multiple de la période de ladite composante porteuse dans ledit signal modulé en phase,
et un moyen d'ajout (AD_1, ..., AD_2) pour ajouter les multiples signaux de retard générés par ledit moyen de génération de signal de retard.

11. Démodulateur selon la revendication 10, **caractérisé en ce que** ledit moyen de reproduction de porteuse contient un moyen de mesure de période (635) pour mesurer la période de ladite composante porteuse sur la base du résultat d'addition dudit moyen d'ajout,
ledit moyen de génération de signal de retard étant configuré pour ajuster le retard donné audit signal modulé en phase correspondant au résultat de mesure dudit moyen de mesure de période.

12. Démodulateur selon la revendication 11, **caractérisé en ce que**
ledit moyen de reproduction de porteuse contient un moyen d'inversion de signe (633) pour prédire le moment où un changement de phase peut avoir lieu dans ledit signal modulé en phase sur la base du résultat de détection dudit circuit de synchronisation et pour inverser le signe dudit signal modulé en phase audit moment de changement de phase prédit ;
ledit moyen de génération de signal de retard étant configuré pour générer le signal de retard avec ledit signe inversé.
